# EUROPEAN PATENT APPLICATION

(11) **EP 1 970 757 A1**
(43) Date of publication of application: **17.09.2008**
(21) Application number: 08002668.5
(22) Date of filing: 13.02.2008
(51) Int. Cl.: G03B 21/16

(54) **Projection apparatus and illumination system thereof**

(30) Priority: 16.03.2007 TW 96204241 U
(71) Applicant: Young Optics Inc., Hsinchu (TW)
(72) Inventor: Tan, Zeu-Chia, Hsinchu (TW); Huang, Jia-Bin, Hsinchu (TW); Yun, Chi-Chui, Hsinchu (TW)
(74) Representative: TER MEER - STEINMEISTER & PARTNER GbR

(57) **Abstract**

An illumination system includes a lamp, an optical element, a fan and a wind-guiding device. The extended direction of the central axis of the fan is slanted to the optic axis of an illumination beam from the lamp with an angle. The wind-guiding device includes a wind-guiding portion and a frame having a first carrying surface for carrying the fan. A second carrying surface of the frame is opposite to the first carrying surface and faces towards the lamp and the optical element. A wind-guiding plate of the wind-guiding portion is extended from a side of the frame towards the optical element and has a bending corner. A part of a cooling airflow from the fan passes through an opening of the frame and is blown to the lamp directly, and another part thereof is guided by the bending corner and is blown directly to the optical element.

## Description

### CROSS-REFERENCE TO RELATED APPLICATION

This application claims the priority benefit of Taiwan application serial no. 96204241, filed on March 16, 2007. The entirety of the above-mentioned patent application is hereby incorporated by reference herein and made a part of this specification.

### BACKGROUND OF THE INVENTION

### 1. Field of the Invention

The present invention generally relates to a display device, and more particularly, to a projection apparatus and an illumination system thereof.

### 2. Description of Related Art

Along with the progress of science and technology, diversified projection apparatus have been broadly applied in various situations, such as bulletin, addressing, theater, AV teaching, interactive teaching, home theater combination, and the like. Conventionally, a projection apparatus usually includes an illumination system, a light valve and an imaging system, and the illumination system includes multiple optical elements, such as a lamp, a color wheel, a light integration rod and lenses. The lamp is employed for providing a light beam, which sequentially passes through the optical elements, the light valve and the imaging system, followed by being projected onto a screen to display an image.

While the lamp is providing a light beam, extremely-high heat energy is generated, therefore, the projection apparatus often includes a fan for cooling the lamp. On the other hand, while the light beam passes through the optical elements, additional heat energy is also generated. To resolve the problem, some projection apparatus include wind-guiding devices for shunting the cooling airflow provided by the fan into the optical elements for cooling. Among the projection apparatus with the above-mentioned scheme, an US patent No. 6,443,575 (as shown by Fig. 1) and a Taiwan Patent No. TWI 235,281 (as shown by Fig. 2) can be mentioned representatively.

Referring to Fig. 1, a conventional projection apparatus 10 cited from the US patent No. 6,443,575 includes a lamp 11, a light valve 12, an optical element 13, an inlet fan 14, an outlet fan 15, a first duct 16 and a second duct 17. The inlet fan 14 is capable of providing a cooling airflow, and a part of the cooling airflow sequentially passes through the light valve 12 and the second duct 17, followed by being blown to the optical element 13. The outlet fan 15 is capable of guiding another part of the cooling airflow to sequentially pass through the first duct 16 and the lamp 11 and then is discharged out of the projection apparatus 10.

Referring to Fig. 2, a conventional projection apparatus 20 cited from the Taiwan Patent No. TWI 235,281 includes a reflective lampshade 21, a luminous source 22, a light integration rod 23, a dichroic filter plate (i.e., color wheel) 24, a fan 25 and a ventilating manifold 26, and ducts of the ventilating manifold 26 are capable of guiding the cooling airflow provided by the fan 25 to the luminous source 22 within the reflective lampshade 21, the light integration rod 23 and the dichroic filter plate 24 for cooling.

It is remarkable that each of the projection apparatus provided by the above-mentioned two patents includes multiple ducts for guiding a cooling airflow, while the lamp and the multiple optical elements of the projection apparatus share the cooling airflow through the ducts for heat dissipation. However, the above-mentioned duct has a plurality of bending corners, which not only increases the production cost of a wind-guiding device (i.e. the first duct 16, the second duct 17 and the ventilating manifold 26), but also lowers the cooling efficiency of the cooling airflow due to a larger wind resistance resulting from the bending corners.

### SUMMARY OF THE INVENTION

Accordingly, the present invention is directed to a projection apparatus and an illumination system thereof, and a part of the cooling airflow provided by a fan directly is blown to a lamp of the illumination system, while another part of the cooling airflow is guided by multiple bending corners of a wind-guiding device to be directly blown to optical elements of the illumination system, which enables the lamp and the optical elements share the cooling airflow provided by the fan for heat dissipation.

The present invention is also directed to a projection apparatus and an illumination system thereof, wherein a wind-guiding device with a less wind resistance is included.

As embodied and broadly described herein, one embodiment of the present invention provides an illumination system, which includes a lamp, at least an optical element, a fan and a wind-guiding device. The lamp herein is employed for providing an illumination beam having an optic axis. The optical element is disposed on the transmission path of the illumination beam. The fan has a central axis and the extended direction of the central axis is slanted to the optic axis with an angle. The wind-guiding device includes a frame and a wind-guiding portion, the frame is disposed beside the lamp, and has a first carrying surface, a second carrying surface opposite to the first carrying surface and an opening going through the first carrying surface and the second carrying surface. The fan is disposed on the first carrying surface, and the second carrying surface faces towards the lamp and the optical element. The wind-guiding portion includes a wind-guiding plate and two baffles opposite to each other, and the wind-guiding plate is extended from a side of the frame towards the optical element and has a bending corner. The baffles are extended from a side towards the optical element and respectively connected to the top and the bottom of the wind-guiding plate. The fan is suitable for providing a cooling airflow. A part of the cooling airflow passes through the opening and then is blown directly to the lamp, and another part of the cooling airflow is guided by the bending corner of the wind-guiding portion and then blown directly to the optical element.

Yet another embodiment of the present invention also provides a projection apparatus, which includes the above-mentioned illumination system, a light valve and a projection lens, wherein the illumination system is for providing an illumination beam, the light valve is disposed on the transmission path of the illumination beam for converting the illumination beam into an image beam and the projection lens is disposed on the transmission path of the image beam.

According to the present invention, the angle is formed between the extended direction of the central axis of the fan and the optic axis, and the wind-guiding plate has the bending corner, therefore, a part of the cooling airflow provided by the fan is able to be directly blown to the lamp, while another part thereof is directly blown to the optical element by means of guiding of the wind-guiding device. Accordingly, the lamp and the optical element may share the cooling airflow provided by the fan for heat dissipation. Moreover, the second carrying surface of the frame faces towards the lamp and the optical element, which is able to reduce the quantity of the bending corners of the wind-guiding portion and lower the wind resistance of the wind-guiding portion. Thus, the dissipation efficiency of the cooling airflow is effectively promoted and the number of fans required in the projection apparatus and the illumination system thereof may be comparative reduced.

Other objectives, features and advantages of the present invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

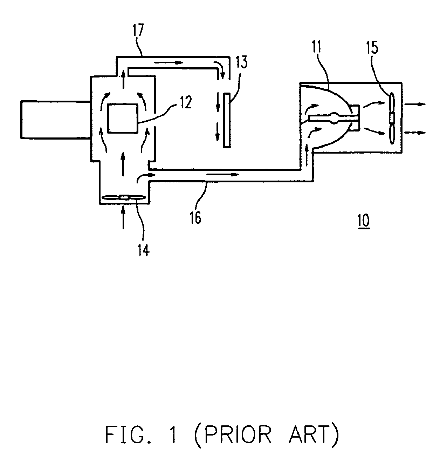

Fig. 1 is a structure diagram of a conventional projection apparatus.

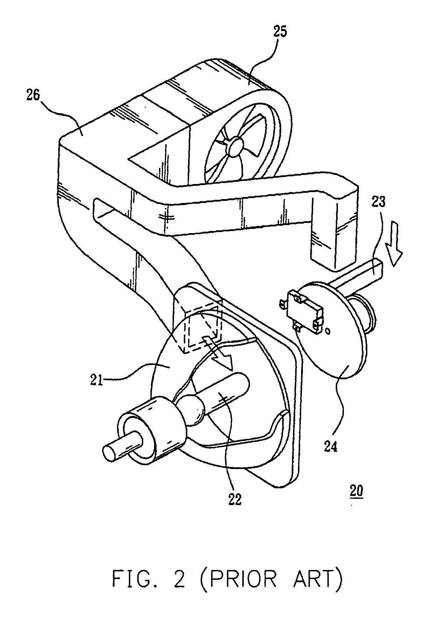

Fig. 2 is a structure diagram of another conventional projection apparatus.

Fig. 3 is a structure diagram of a projection apparatus according to an embodiment of the present invention.

Fig. 4 is a perspective view of the projection apparatus in Fig. 3.

Fig. 5 is an exploded view of the projection apparatus in Fig. 4.

Fig. 6 is a top view of the wind-guiding device in Fig. 3.

Fig. 7A and Fig. 7B are perspective views of the wind-guiding device in Fig. 6.

### DESCRIPTION OF THE EMBODIMENTS

In the following detailed description of the preferred embodiments, reference is made to the accompanying drawings which form a part hereof, and in which is shown by way of illustration specific embodiments in which the invention may be practiced. In this regard, directional terminology, such as "top," "bottom," "front," "back," etc., is used with reference to the orientation of the Figure(s) being described. The components of the present invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein are meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component facing "B" component directly or one or more additional components is between "A" component and "B" component. Also, the description of "A" component "adjacent to" "B" component herein may contain the situations that "A" component is directly "adjacent to" "B" component or one or more additional components is between "A" component and "B" component. Accordingly, the drawings and descriptions will be regarded as illustrative in nature and not as restrictive.

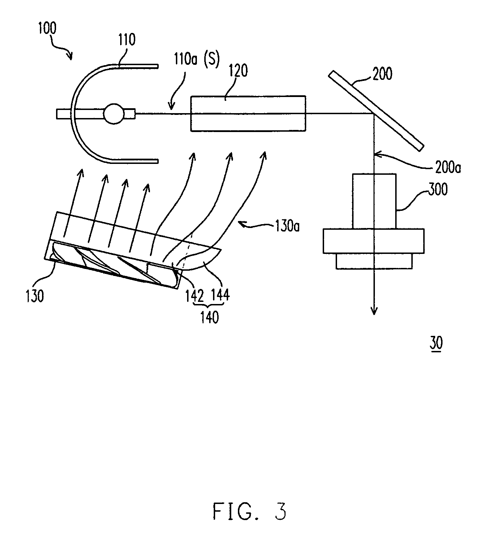

Referring to Figs. 3-7B, an illumination system 100 is suitable to be assembled into a projection apparatus 30 and includes a lamp 110 (shown in Fig. 3), at least an optical element 120, a fan 130 and a wind-guiding device 140. The lamp 110 is employed for providing an illumination beam 110a (shown in Fig. 3) having an optic axis S, the optical element 120 is disposed on the transmission path of the illumination beam 110a, the fan 130 has a central axis and an extended direction of the central axis is slanted to the optic axis S with an angle.

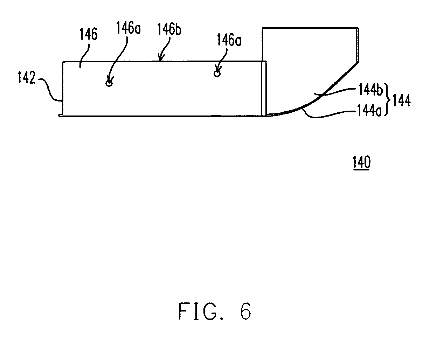

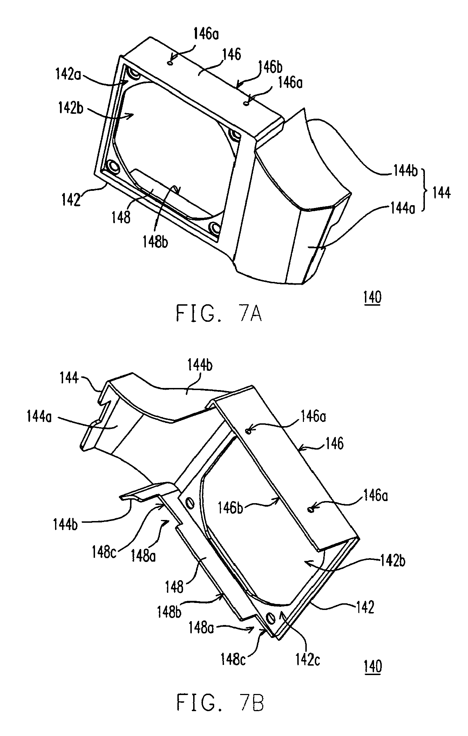

The wind-guiding device 140 includes a frame 142 and a wind-guiding portion 144 extended from a side of the frame 142 towards the optical element 120. The frame 142 is disposed beside the lamp 110 and has a first carrying surface 142a, a second carrying surface 142c (shown in Fig. 7B) opposite to the first carrying surface 142a and an opening 142b going through the first carrying surface 142a and the second carrying surface 142c. The wind-guiding portion 144 includes a wind-guiding plate 144a and two baffles 144b opposite to each other. The wind-guiding plate 144a is extended from the side of the frame 142 towards the optical element 120 and has a bending corner as shown by Fig. 6. The baffles 144b are extended from the side of the frame 142 towards the optical element 120 and respectively connected to the top and the bottom of the wind-guiding plate 144a. The fan 130 is employed for providing a cooling airflow 130a (shown in Fig. 3) and is disposed on the first carrying surface 142a, while the second carrying surface 142c faces towards the lamp 110 and the optical element 120. A part of the cooling airflow 130a passes through the opening 142b and then is blown directly to the lamp 110, and another part of the cooling airflow 130a is guided by the bending corner of the wind-guiding portion 144 and then blown directly to the optical element 120.

According to the embodiment, the projection apparatus 30 includes the above-mentioned illumination system 100, a light valve 200 and a projection lens 300. The light valve 200 is disposed on the transmission path of the illumination beam 1 l0a and capable of converting the illumination beam 110a into an image beam 200a. The projection lens 300 is disposed on the transmission path of the image beam 200a and capable of projecting the image beam 200a onto a screen (not shown) to display an image.

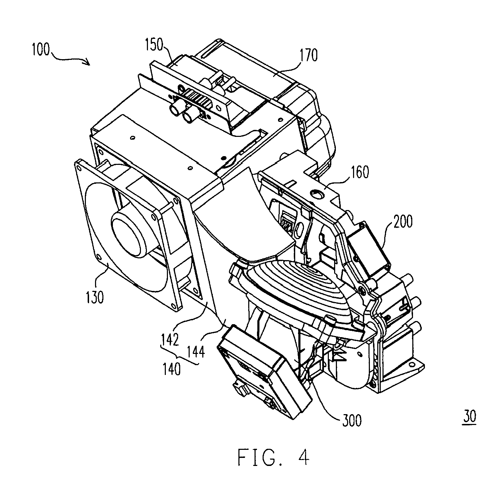

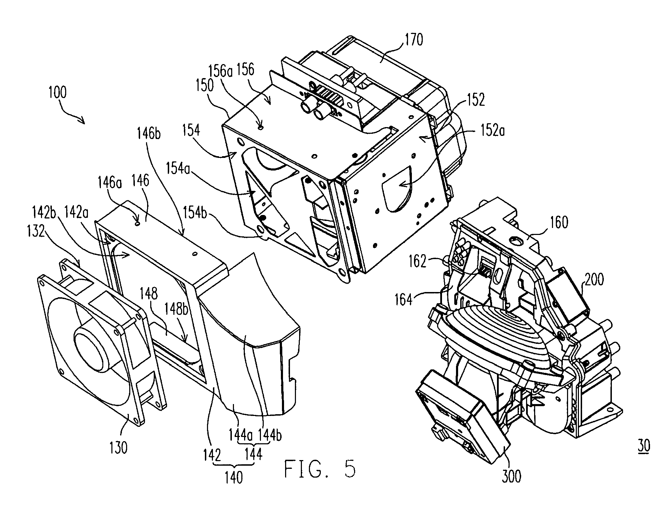

Referring to Figs. 4 and 5, the light valve 200 in the embodiment is, for example, a digital micro-mirror device (DMD), while the projection lens 300 is, for example, an L-type projection lens (as shown by Figs. 4 and 5). However, all the implementations do not limit the present invention. For example, the light valve 200 may be a transmissive liquid crystal display panel, a liquid crystal on silicon (LCOS) panel or other devices enabling to convert an illumination beam into an image beam. Besides, the projection lens 300 may be a straight projection lens as well.

The fan 130 is, for example, an axial fan. In addition, the illumination system 100 further includes a light box 150, and the lamp 110 (shown in Fig. 3) is disposed, for example, in the light box 150. The light box 150 has a first surface 152 and a second surface 154, and the first surface 152 has a first through hole 152a, while the second surface 154 has a second through hole 154a. The optical element 120 is disposed, for example, beside the first surface 152, and the illumination beam 110a passes through, for example, the first through hole 152a to the optical element 120. The wind-guiding device 140 is disposed, for example, on the second surface 154 so that a part of the cooling airflow 130a passes through the opening 142b and the second through hole 154a, followed by being blown directly to the lamp 110. On the other hand, once the wind-guiding device 140 is disposed on the second surface 154, the opening 142b and the second carrying surface 142c face towards the lamp 110 and the optical element 120 so that another part of the cooling airflow 130a is blown directly to the optical element 120. In this way, the lamp 110 and the optical element 120 share the cooling airflow 130a for heat dissipation.

The illumination system 100 further includes an optical engine base 160, and the optical element 120 (shown in Fig. 3) is disposed, for example, in the optical engine base 160. In the embodiment, the optical element 120 is, for example, a light integration rod, while the optical engine base 160 has at least a fin 162 (shown in Fig. 5) connected to the light integration rod (optical element 120). The heat sourced from the light integration rod (optical element 120) is conducted to the fin 162, while the wind-guiding portion 144 is capable of guiding a part of the cooling airflow 130a to be blown to the fin 162 so as to improve the efficiency of cooling the light integration rod (optical element 120). It is noted that the present invention is not limited by the embodiment. For example, the optical element 120 may also be a color wheel (not shown), the optical engine base 160 may also be a cover-body 164 (shown in Fig. 5) covering the color wheel, and the wind-guiding portion 144 is accordingly suitable for guiding a part of the cooling airflow 130a to be blown to the cover-body 164 to improve the efficiency of cooling the color wheel. The wind-guiding portion 144 is also for guiding a part of the cooling airflow 130a to be blown to the fin 162, the cover-body 164 or other optical elements.

Referring Figs. 6-7B, the frame 142 in the present embodiment has no bending corner, thus, the frame 142 does not cause a wind resistance over the cooling airflow 130a. Moreover, the wind-guiding portion 144 has a bending corner only, which causes a less wind resistance over the cooling airflow 130a than the wind resistance over the cooling airflow produced by a duct in the prior art. In short, the wind-guiding device 140 of the present invention produces a less wind resistance over the cooling airflow 130a with better dissipation efficiency of the cooling airflow 130a. Accordingly, the projection apparatus 30 and the illumination system 100 thereof are allowed to employ fewer fans 130 to achieve better dissipation efficiency. In addition, the bending corner of the wind-guiding portion 144 may be a cambered surface as shown by Fig. 6, so that the produced wind resistance over the cooling airflow 130a gets less.

In more detail, the wind-guiding device 140 further has a first side wall 146 and a second side wall 148 opposite to the first side wall 146. The first side wall 146 has multiple first thread holes 146a, while the second side wall 148 has two embedding portions 148a (shown in Fig. 7B). In addition, the light box 150 (shown in Fig. 5) further has a third surface 156 and a fourth surface (not shown) opposite to the third surface 156. The second surface 154 further has two lugs 154b located at the edge of the second surface 154 and adjacent to the fourth surface, while the third surface 156 has multiple second thread holes 156a. Once the wind-guiding device 140 is mounted on the second surface 154, the first side wall 146 is connected to the third surface 156, the first thread holes 146a are corresponding to the second thread holes 156a, multiple screws (not shown) go through the first thread holes 146a and the second thread holes 156a to affix the wind-guiding device 140 onto the light box 150, the second side wall 148 would be connected to the fourth surface, and the lugs 154b are supported onto the bottom surfaces 148c of the embedding portions 148a.

It is noted that the top surface 146b of the first side wall 146 and the top surface 148b of the second side wall 148 are parallel to the first carrying surface 142a, the connection line of the first thread holes 146a is not parallel to the first carrying surface 142a, and the bottom surfaces 148c of the embedding portions 148a are not parallel to the first carrying surface 142a, therefore, when the first thread holes 146a are aligned with the corresponding second thread holes 156a and the lugs 154b are supported onto the bottom surfaces 148c of the embedding portions 148a, the opening 142b and the second carrying surface 142c of the wind-guiding device 140 face towards the lamp 110 and the optical element 120.

The above-described embodiment does not limit the scope of the present invention as such. For example, the first side wall 146 may have embedding portions (not shown), and the second surface 154 may also have two lugs located at the edge of the second surface 154 and adjacent to the third surface 156 to make the opening 142b and the second carrying surface 142c facing towards the lamp 110 and towards the optical element 120 with an angle slanted to the direction of the optical element 120 once the lugs adjacent to the third surface 156 are supported onto the embedding portions of the first side wall 146. Alternatively, the second side wall 148 and the fourth surface (not shown) may also respectively have first thread holes (not shown) and second thread holes (not shown) to make the opening 142b facing towards the optical element 120 with an angle slanted to the direction of the optical element 120 once the first thread holes of the second side wall 148 are aligned with the corresponding second thread holes of the fourth surface.

In addition, the illumination system 100 may further include another wind-guiding device 170 disposed beside the lamp 110, and the wind-guiding device 170 is connected to, for example, the surface opposite to the second surface 152 of the light box 150, so that the cooling airflow 130a blown to the lamp 110 is discharged out of the illumination system 100 via the wind-guiding device 170.

In summary, the projection apparatus and the illumination system thereof according to the embodiment of the present invention has at least one or more of the following advantages.
1. The frame has no bending corner, so that a part of the cooling airflow provided by the fan is directly blown to the lamp, and the frame poses a negligible wind resistance over the cooling airflow.
2. Another part of the cooling airflow is directly blown to the optical element by means of guiding of the bending corner of the wind-guiding portion, thus, the lamp and the optical element share the cooling airflow provided by the fan for heat dissipation.
3. The wind-guiding plate of the wind-guiding portion has a bending corner only, which makes the wind-guiding portion to cause a less wind resistance. Therefore, the dissipation efficiency of the cooling airflow is improved and the projection apparatus and the illumination system thereof are allowed to employ fewer fans with better dissipation efficiency.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like is not necessary limited the claim scope to a specific embodiment, and the reference to particularly preferred exemplary embodiments of the invention does not imply a limitation on the invention, and no such limitation is to be inferred. The invention is limited only by the spirit and scope of the appended claims. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. An illumination system, comprising:
a lamp, for providing an illumination beam having an optic axis;
at least an optical element, disposed on a transmission path of the illumination beam;
a fan, having a central axis, wherein an extended direction of the central axis is slanted to the optic axis with an angle; and
a wind-guiding device, comprising:
a frame, disposed beside the lamp, having a first carrying surface, a second carrying surface opposite to the first carrying surface and an opening passing through the first carrying surface and the second carrying surface, wherein the fan is disposed on the first carrying surface, and the second carrying surface faces towards the lamp and the optical element; and
a wind-guiding portion, comprising a wind-guiding plate and two baffles disposed opposite to each other, wherein the wind-guiding plate is extended from a side of the frame towards the optical element and has a bending corner, the baffles are extended from the side of the frame towards the optical element and respectively connected to a top and a bottom of the wind-guiding plate, and the fan provides a cooling airflow, a part of the cooling airflow passing through the opening and then being blown directly to the lamp, and another part of the cooling airflow being guided by the bending corner of the wind-guiding portion and then blown directly to the optical element.

2. The illumination system according to claim 1, further comprising an optical engine base, wherein the optical element is disposed in the optical engine base.

3. The illumination system according to claim 2, wherein the optical element is a color wheel and the optical engine base has a cover-body to cover the color wheel.

4. The illumination system according to claim 2, wherein the optical element is a light integration rod and the optical engine base has at least a fin connected to the light integration rod.

5. The illumination system according to claim 1, wherein the fan is an axial fan.

6. A projection apparatus, comprising:
an illumination system, comprising:
a lamp, for providing an illumination beam having an optic axis;
at least an optical element, disposed on a transmission path of the illumination beam;
a fan, having a central axis, wherein an extended direction of the central axis is slanted to the optic axis with an angle; and
a wind-guiding device, comprising:
a frame, disposed beside the lamp, having a first carrying surface, a second carrying surface opposite to the first carrying surface and an opening passing through the first carrying surface and the second carrying surface, wherein the fan is disposed on the first carrying surface, and the second carrying surface faces towards the lamp and the optical element; and
a wind-guiding portion, comprising a wind-guiding plate and two baffles disposed opposite to each other, wherein the wind-guiding plate is extended from a side of the frame towards the optical element and has a bending corner, the baffles are extended from the side of the frame towards the optical element and respectively connected to a top and a bottom of the wind-guiding plate, and the fan provides a cooling airflow, a part of the cooling airflow passing through the opening and then being blown directly to the lamp, and another part of the cooling airflow being guided by the bending corner of the wind-guiding portion and then blown directly to the optical element;
a light valve, disposed on the transmission path of the illumination beam, for converting the illumination beam into an image beam; and
a projection lens, disposed on the transmission path of the image beam.

7. The projection apparatus according to claim 6, further comprising an optical engine base, wherein the optical element is disposed in the optical engine base.

8. The projection apparatus according to claim 7, wherein the optical element is a color wheel and the optical engine base has a cover-body to cover the color wheel.

9. The projection apparatus according to claim 7, wherein the optical element is a light integration rod and the optical engine base has at least a fin connected to the light integration rod.

10. The projection apparatus according to claim 6, wherein the fan is an axial fan.
